# FASCICULE DE BREVET EUROPEEN

(11) **EP 2 862 438 B1**
(45) Date de publication et mention de la délivrance du brevet: **14.09.2016**
(21) Numéro de dépôt: 14189426.1
(22) Date de dépôt: 17.10.2014
(51) Int. Cl.: A01K 31/00, A01K 39/06

(54) **Cage de gavage de volaille comprenant une paroi de fond formant plancher**
Stopfkäfig für Geflügel, der eine Wand umfasst, die einen Boden bildet
Cage for force-feeding poultry comprising a bottom wall forming a floor

(30) Priorité: 21.10.2013 FR 1360231
(43) Date de publication de la demande: 22.04.2015
(73) Titulaire: Ernest Soulard, 85140 l'Oie (FR)
(72) Inventeur: Auguin, Marc, 85500 ST PAUL EN PAREDS (FR)
(74) Mandataire: Dutreix, Hugues Ours

(56) Documents cités:
- EP-A1- 2 412 235
- CH-A5- 563 710
- DE-A1- 2 545 924
- US-A- 4 023 530

## Description

La présente invention concerne de manière générale les cages de gavage, de préférence les cages de gavage collectives.

La Convention Européenne pour la protection des animaux dans les élevages a émis des recommandations stipulant que les animaux doivent pouvoir réaliser des comportements naturels diversifiés, tels que se déplacer, se retourner, étirer les ailes, etc. A la suite de ces recommandations, les cages de gavage individuelles ont été remises en cause et les professionnels se sont orientés vers l'utilisation de cages collectives.

Il a été observé que des volailles gavées dans les cages collectives connues de l'état de la technique présentent une dégradation de leur plumage au niveau du bréchet. Cette dégradation du plumage peut être à l'origine de lésions pouvant impacter la qualité des magrets et des foies gras en raison d'infections et d'hématomes.

Les documents DE-25 45 924 et US-4.023.530 décrivent des cages dont la paroi de fond formant plancher est munie d'élément souples, mais la conception de ces éléments souples ne permet pas une mise en place et un retrait aisé de ces éléments par rapport au plancher.

La présente invention a pour but de proposer une nouvelle cage de gavage permettant de résoudre tout ou partie des problèmes présentés ci-dessus.

A cet effet, l'invention a pour objet une cage de gavage de volailles comprenant une paroi de fond formant plancher pour les volailles, ladite paroi de fond comprenant une grille de barreaux, ladite paroi de fond comprenant des éléments d'amortissement, chaque élément d'amortissement présentant au moins une partie, appelée bourrelet d'amortissement, qui est élastiquement déformable par appui des volailles et qui s'étend en saillie de la grille de barreaux du côté de l'intérieur de la cage, caractérisée en ce que chaque élément d'amortissement comprend une aile de positionnement configurée pour coupler ledit élément d'amortissement à la grille de barreaux. Ladite grille de barreaux comprenant une pluralité de paires de barreaux, les barreaux de chaque paire sont espacés entre eux d'une distance permettant le passage de l'aile de positionnement d'un des éléments d'amortissement, et l'aile de positionnement est munie de lèvres de retenue par rapport aux barreaux.

Une telle cage dont la paroi de fond présente des éléments d'amortissement, encore appelés joints d'amortissement, permet de limiter le risque de blessures au niveau du bréchet des volailles lorsque leurs mouvements sont restreints pour les gaver.

En effet, une telle paroi de fond de cage permet d'amortir les mouvements de compression des volailles lors de leur contention pour le gavage. En particulier l'élément d'amortissement rend la face de la paroi de fond de cage sur laquelle se déplacent les volailles, plus souple que celle des cages connues de l'état de la technique. En effet, les bourrelets vont jouer le rôle d'amortisseur en cas de compression plus intense des volailles lors de la phase de contention avant gavage.

Le corps de la volaille n'a ainsi plus de contact direct avec les parties métalliques de la grille de la paroi de fond de sorte que le risque de blessure en particulier pendant la phase de contention est réduit.

Les lèvres et le bourrelet forment des butées verticales de maintien en position de l'élément d'amortissement de part et d'autre de la paire de barreaux. Avantageusement, la largeur du bourrelet de chaque élément d'amortissement est, au moins à l'état écrasé dudit bourrelet, supérieure à la largeur hors-tout de l'ensemble formé de la paire de barreaux qui supporte ledit élément d'amortissement, afin que le corps des volailles, notamment le bréchet, ne heurte pas directement lesdits barreaux. Dans l'exemple illustré aux figures, même à l'état non écrasé, la largeur du bourrelet de chaque élément d'amortissement est supérieure à la largeur hors-tout dudit ensemble formé de la paire de barreaux correspondante.

Selon une caractéristique avantageuse de l'invention, les barreaux de chaque paire de barreaux sont espacés d'une distance permettant l'introduction, entre les deux barreaux, de l'aile de positionnement d'un des éléments d'amortissement, et les lèvres sont configurées de manière à se rabattre par déformation élastique lors du passage entre les deux barreaux et à reprendre leur forme déployée initiale après passage desdits barreaux.

Chaque élément d'amortissement est ainsi maintenu entre deux barreaux d'une paire de barreaux de la paroi de fond par lesdites lèvres et le bourrelet, tout en autorisant un retrait de l'élément d'amortissement par déformation élastique des lèvres, ce qui rend ledit élément d'amortissement amovible et remplaçable rapidement.

Selon une caractéristique avantageuse de l'invention, l'aile de positionnement s'étend sur plus de la moitié de la longueur dudit bourrelet, et de manière discontinue pour permettre le passage de barreaux de la grille qui s'étendent transversalement audit élément d'amortissement, à travers ladite aile de positionnement.

Lesdits barreaux transversaux sont situés sous les paires de barreaux qui forment des supports pour les éléments d'amortissement.

En particulier, des échancrures sont ménagées dans l'aile de positionnement de sorte que l'aile de positionnement de l'élément d'amortissement s'étende entre les barreaux transversaux et s'interrompe au niveau desdits barreaux transversaux.

Selon une caractéristique avantageuse de l'invention, ledit bourrelet d'amortissement de chaque élément d'amortissement se présente sous la forme d'un corps creux allongé.

Le bourrelet peut ainsi s'écraser et se déformer facilement par appui des volailles afin d'absorber au moins une partie de l'effort d'appui.

Selon une caractéristique avantageuse de l'invention, l'écartement entre deux éléments d'amortissement est compris entre 3.2 et 3.5 cm, de préférence de l'ordre de 3.3 cm.

Lesdits éléments d'amortissement s'étendent avantageusement suivant une direction parallèle à la direction avant-arrière de la cage en étant écartés les uns des autres pour que les pattes des volailles puissent venir en appui sur les barreaux de la grille entre deux éléments d'amortissement

Selon une caractéristique avantageuse de l'invention, la cage présente une paroi, appelé paroi avant, qui comprend une partie inférieure fixe qui s'étend transversalement à la paroi de fond, et une partie supérieure, ajourée, par exemple formée par une grille, appelée paroi de contention, qui est articulée à la partie inférieure de la paroi avant entre une position relevée dans laquelle des volailles peuvent circuler dans le volume intérieur de la cage délimité par les parois de la cage, et une position abaissée dans laquelle ledit volume intérieur de la cage est réduit.

La mobilité de la partie supérieure de la paroi avant qui forme paroi de contention permet à la cage de prendre deux configurations. Une première configuration dans laquelle la cage présente un volume intérieur donné permet de mettre en oeuvre une phase d'élevage classique avec une liberté de mouvement des animaux, tandis que dans une deuxième configuration, ledit volume intérieur de la cage est réduit pour restreindre le mouvement des volailles par contention afin de mettre en oeuvre une phase de gavage.

Selon une caractéristique avantageuse de l'invention, lesdits éléments d'amortissement s'étendent parallèlement les uns aux autres et à écartement des uns des autres.

Selon une caractéristique avantageuse de l'invention, l'articulation est située par rapport à la paroi de fond de la cage à une hauteur comprise entre 18.5 et 20 cm, de préférence de l'ordre de 19 cm.

Une telle hauteur de l'articulation fait que, en position de contention et pour une volaille de taille moyenne, la paroi de contention s'appuie sur le dos des volailles en formant une pente ascendante depuis la zone d'appui sur le dos des volailles vers l'articulation de la paroi de contention.

Lors du gavage, la paroi de contention (appelée aussi porte) est abaissée, de préférence de manière automatisée et progressive, jusqu'à une position finale en dessous de l'horizontalité en laissant un espace plus haut sur la partie avant. Ainsi, les volailles se positionnent progressivement vers cet espace plus haut en limitant les frottements de leur jabot sur le fond de cage.

Lors de la contention pour le gavage ce guidage progressif des volailles vers l'avant où ils avancent dans un espace de plus grande hauteur au niveau de l'avant de la cage, se combine avec l'amortissement par la paroi de fond des mouvements de compression des volailles. Le fait d'induire une avancée progressive des canards vers un espace où la hauteur est plus grande et sans frottement de leur ventre sur le sol, réduit de manière très importante le risque de blessure des volailles.

Ainsi la volaille est guidée progressivement vers le gaveur sans blessure du jabot, contrairement aux systèmes de contention des cages connus de l'état de la technique qui, en forçant l'avancement des canards par le fond de la cage vers l'avant dans un espace où la hauteur est restreinte, induisent des frottements des canards sur la paroi de fond de cage à l'origine de blessures sur les bréchets.

Préférentiellement, lesdits éléments d'amortissement sont réalisés en un matériau élastomère.

Avantageusement, lesdits éléments d'amortissement présentent une dureté comprise entre 20 et 95 shore A, de préférence comprise entre 60 et 70 shore A.

L'invention sera bien comprise à la lecture de la description suivante d'exemples de réalisation, en référence aux dessins annexés dans lesquels :

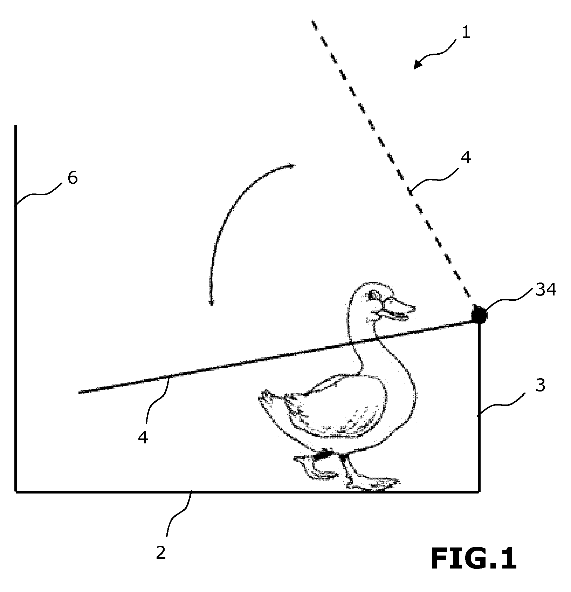

- la figure 1 est une vue en coupe d'une cage selon l'invention, montrant la mobilité de pivotement de la partie supérieure, appelée paroi de contention, de la paroi avant ;
- la figure 2 est une vue en perspective d'un mode de réalisation de la paroi de fond de la cage selon l'invention ;
- la figure 3 est une vue en coupe d'une partie de la paroi de fond de la figure 2 montrant un élément d'amortissement couplé élastiquement à des paires de barreaux de la paroi de fond.

En référence aux figures et comme rappelé ci-dessus, l'invention concerne une cage 1 de gavage de volailles qui comprend une paroi avant 3, 4 et une paroi arrière 6 reliées entre elles par deux parois latérales non représentées et sensiblement parallèles l'une à l'autre.

Ladite cage 1 comprend une paroi de fond 2 qui s'étend transversalement aux parois latérales et aux parois avant et arrières, de préférence sensiblement horizontalement. Ladite paroi de fond 2 forme ainsi un plancher pour les volailles. Autrement dit, ladite paroi de fond 2 est une paroi sur laquelle les volailles sont, en l'absence de contention, aptes à se déplacer.

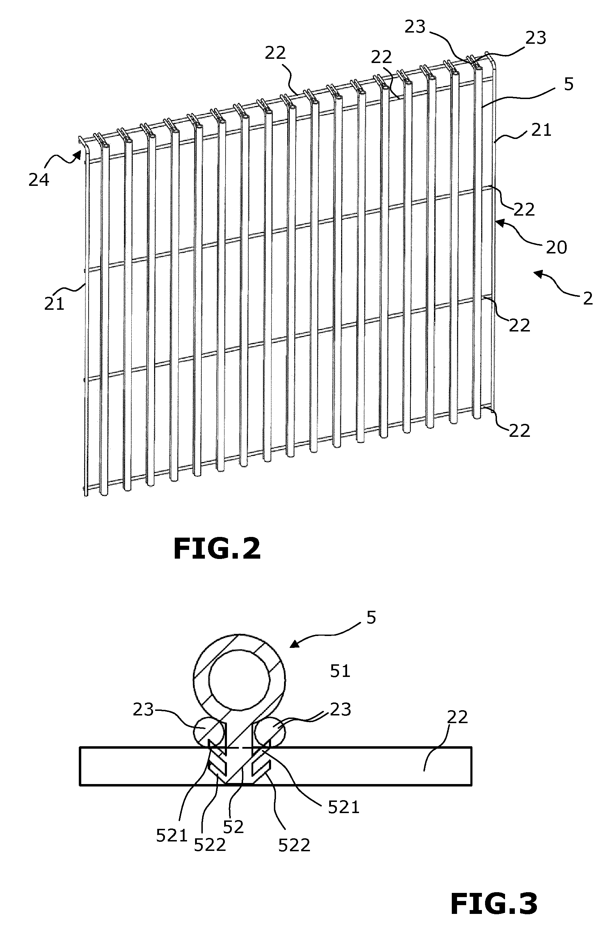

Comme détaillé ci-après et illustré plus particulièrement à la figure 2, ladite paroi de fond 2 comprend une grille 20 de barreaux. Ladite paroi de fond 2 comprend des éléments 5 d'amortissement. Chaque élément 5 d'amortissement comprend au moins une partie 51, appelée bourrelet d'amortissement, qui est élastiquement déformable par appui des volailles et qui s'étend en saillie de la grille 20 de barreaux du côté de l'intérieur de la cage 1.

La grille 20 de la paroi de fond 2 comporte une série de paires de barreaux 23 qui s'étendent parallèlement et à écartement les unes des autres, en étant solidarisées de préférence par soudure à une série de barreaux 22 transversaux qui s'étendent orthogonalement aux barreaux 23. La grille 20 comporte aussi deux barreaux 21 d'extrémité disposés aux extrémités respectives de la série de paires de barreaux 23 et écartés desdites paires de barreaux 23. Avantageusement, les autres parois ou parties de paroi sont aussi formées à partir de grilles de barreaux.

Ledit bourrelet d'amortissement 51 de chaque élément 5 d'amortissement se présente sous la forme d'un corps allongé creux de section sensiblement circulaire.

Chaque élément 5 d'amortissement comprend une aile 52 de positionnement configurée pour coupler ledit élément 5 d'amortissement à la grille 20 de barreaux. Comme détaillé ci-après, l"aile 52 de positionnement de chaque élément 5 d'amortissement est apte à être introduite par son bord libre entre une paire de barreaux 23 de la grille 20 de la paroi de fond 2.

L'aile 52 de positionnement s'étend radialement par rapport au bourrelet 51 sur plus de la moitié de la longueur dudit bourrelet 51, et de manière discontinue pour permettre le passage de barreaux 22 de la grille 20 à travers ladite aile 52 de positionnement. En particulier, chaque élément 5 d'amortissement présente sur sa longueur des échancrures ménagées au niveau de l'aile 52 de positionnement pour pouvoir positionner ledit élément 5 d'amortissement sur des barreaux 22 qui s'étendent à travers le passage formé par les échancrures transversalement auxdits éléments 5 d'amortissement. Avantageusement, les échancrures sont formées par découpe de l'aile de positionnement.

Lesdites discontinuités permettent aux éléments 5 d'amortissement de coiffer les barreaux 22 de la grille de la paroi de fond 2 de sorte que lesdits éléments 5 d'amortissement restent sensiblement rectilignes en l'absence de contraintes exercées par les volailles.

L'aile 52 de positionnement de chaque élément 5 d'amortissement est apte à être introduite entre une paire de barreaux 23 de la grille 20 de la paroi de fond 2 et est muni de lèvres 521, 522 de retenue par rapport aux barreaux 23.

En particulier, les barreaux 23 de chaque paire sont espacés entre eux d'une distance permettant le passage de l'aile 52 de positionnement d'un des éléments 5 d'amortissement de telle sorte que les lèvres 521, 522 de maintien s'étendent, par rapport à ladite paire de barreaux 23, du côté opposé au bourrelet 51 d'amortissement.

Plus précisément, les barreaux 23 sont espacés d'une distance, de préférence de l'ordre de quatre millimètres permettant l'introduction, à travers les deux barreaux 23, de l'aile d'insertion dont les lèvres 521, 522 se rabattent lors du passage entre les deux barreaux pour revenir en une position déployée après passage desdits barreaux.

Les lèvres 521, 522 de maintien s'étendent, par rapport à ladite paire de barreaux 23, du côté opposé au bourrelet 51 d'amortissement. Chaque barreau 23 d'une paire de barreaux est situé entre le bourrelet 51 et une lèvre 521 ou 522 de l'aile 52 de positionnement

Ainsi lesdites lèvres 521, 522 forment des butées élastiques empêchant l'élément 5 ou joint d'amortissement de se libérer de la paire de barreaux 23 en l'absence d'effort de traction exercé par l'opérateur sur ledit élément 5.

Lesdites lèvres 521, 522 de retenue comprennent au moins une paire de lèvres qui s'étendent de part et d'autre de l'aile 52 de positionnement. Avantageusement, l'aile 52 est munie de plusieurs, de préférence deux, paires de lèvres, lesdites paires de lèvre étant écartées l'une de l'autre ou les unes des autres suivant la hauteur de l'aile 52.

La ou chaque lèvre 521, 522 de maintien forme avec l'aile 52 qui la porte un angle dont l'intérieur est orienté vers le bourrelet 51. Autrement dit, chaque lèvre situé d'un côté de l'aile 52 de positionnement et la lèvre située de l'autre côté forment entre elle un V ouvert vers le bourrelet 51 par opposition au bord longitudinal libre de l'aile.

En section transversale et à une position longitudinale dudit élément 5 dépourvue d'échancrure de positionnement, ledit bourrelet 51 présente une forme circulaire prolongée diamétralement par l'aile 52 de positionnement.

Lesdits éléments 5 d'amortissement s'étendent parallèlement les uns aux autres et à écartement des uns des autres. Le nombre desdits éléments 5 d'amortissement est choisi de sorte que lesdits éléments 5 d'amortissement soit répartis sur une grande partie de la paroi de fond 2 avec un écartement donné permettant le nettoyage de la cage. A cet effet, l'écartement entre deux éléments 5 d'amortissement est compris entre 3.2 et 3.5 cm, de préférence de l'ordre de 3.3 cm.

La paroi avant 3, 4 comprend une partie inférieure 3 fixe qui s'étend orthogonalement à la paroi de fond 2, et une partie supérieure 4, appelée paroi de contention, articulée 34 à la partie inférieure 3 de la paroi avant entre une position relevée, dite position d'élevage, dans laquelle des volailles peuvent circuler dans le volume intérieur de la cage 1 délimité par les parois de la cage 1, et une position abaissée, dite position de contention, dans laquelle ledit volume intérieur de la cage 1 est réduit. La paroi de contention 4 est plus haute que la partie inférieure 3 en position relevée.

Chaque élément 5 d'amortissement s'étend ainsi suivant une direction arrière-avant qui relie la paroi arrière 6 à la partie fixe 3 de la paroi avant ou encore transversalement par rapport à l'axe de pivotement 34 de la paroi de contention 4.

Ladite paroi de contention, de préférence formée par une grille, présente des jours pour le passage de la tête des volailles à travers la grille en position de contention. L'articulation 34 est située par rapport à la paroi de fond 2 de la cage 1 à une hauteur comprise entre 18.5 et 20 cm, de préférence de l'ordre de 19 cm. Ainsi, lorsque des volailles sont présentes dans la cage 1 et lorsque l'opérateur souhaite immobiliser lesdites volailles, la paroi de contention 4 est rabattue en dessous de l'horizontale contre le dos des volailles, ce qui les entraine vers l'avant de la cage de plus grande hauteur par rapport à la hauteur de l'extrémité libre de la paroi de contention.

Un mode de réalisation particulier du fond de cage selon l'invention est décrit ci-dessous.

Les barreaux de la grille de la paroi de fond de la cage peuvent être réalisés en fil ou rond inox de diamètre compris entre 4 et 5 millimètres avec un choix d'espacement des barreaux 23 servant de support dudit élément 5, de l'ordre de 37 millimètres, afin de permettre aux volailles de se déplacer avec aisance en tenant compte de la forme des pattes de l'animal.

Comme illustré à la figure 2, cette grille de la paroi de fond possède un bord 24 plié de l'ordre de 42 millimètres dans le sens de la longueur afin d'assurer sa rigidité et préserver les animaux de toutes blessures.

Lesdits éléments d'amortissement s'étendent sensiblement sur toute la longueur, c'est-à-dire suivant l'axe avant-arrière de la paroi de fond. L'aile de positionnement 52 se présente sous la forme d'une partie rectangulaire de hauteur de l'ordre de 8 millimètres avec une largeur de l'ordre de 3,5 millimètres à quatre lèvres pour un montage inséré entre les barreaux d'une paire de barreaux 23. Chaque barreau 23 est formé d'un rond inox.

Dans l'exemple illustré aux figures, ladite grille est équipée de dix-sept éléments d'amortissement tels que décrits ci-dessus, de type PP/EPDM (Polypropylène, Elastomère thermoplastique). En variante, le matériau utilisé peut être un caoutchouc ou un éthylène-propylène-diène monomère, appelé EPDM.

Comme détaillé ci-dessus, la partie supérieure dudit élément d'amortissement est formée d'un bourrelet creux de diamètre intérieur de l'ordre de 8 millimètres et de paroi en EPDM d'épaisseur de l'ordre de 2 millimètres.

Chaque élément d'amortissement de type PP/EPDM possède une dureté comprise entre 20 à 95 shore A, de préférence de l'ordre de 65 shore A suivant la norme de mesure ASTM D2240.

Selon un mode de réalisation préférentiel, le matériau utilisé est du PRODENE 503 commercialisé par la Société CNCP BORDET dont les caractéristiques sont les suivantes :

| | | |
|---|---|---|
| *Dureté 5 SEC : | 65 Shore A | ASTM D2240 |
| *Densité : | 1.00 | ASTM D 792 |
| *Résistance rupture : | 5.90 Mpa | ASTM D 412.A |
| *Allongement rupture : | | ASTM D 412.A |
| *D.R.C (Déformation Permanente Compressée) ASTM D395 | | |
| 22h à 23°C 28% | | |
| 22h à 70°C 41 % | | |
| * Température d'emploi : | -40°C à +90°C | |

Un tel matériau confère une souplesse et une forme à chaque élément d'amortissement de manière à assurer un confort des animaux dans la position repos et de préserver la qualité du produit recherché, à savoir la viande et le foie.

Un choix de dureté de l'ordre de 65 shore A permet de répondre à plusieurs critères dont :
- la souplesse, pour le confort des animaux,
- la résistance aux griffures et aux agents chimiques de désinfection ainsi qu'à la pression de lavage,
- la tenue à la flexion répétée,
- un poids faible dudit élément d'amortissement.

Préférentiellement, ladite cage fait partie d'une installation de plusieurs cages. Un bras de gavage peut être déplié sur plusieurs, par exemple cinq, rangées.

Ledit bras permet de réaliser le gavage à l'horizontal et non à l'oblique comme dans les installations connues de l'état de la technique qui mettent en oeuvre un gavage par le dessus induisant plus de troubles musculaires.

## Revendications

1. Cage (1) pour le gavage de volailles comprenant une paroi de fond (2) formant plancher pour les volailles, ladite paroi de fond (2) comprenant une grille (20) de barreaux,
ladite paroi de fond (2) comprenant des éléments (5) d'amortissement, chaque élément (5) d'amortissement présentant au moins une partie (51), appelée bourrelet d'amortissement, qui est élastiquement déformable par appui des volailles et qui s'étend en saillie de la grille (20) de barreaux du côté de l'intérieur de la cage (1),
**caractérisée en ce que** chaque élément (5) d'amortissement comprend une aile (52) de positionnement configurée pour coupler ledit élément (5) d'amortissement à la grille (20) de barreaux,
**en ce que** ladite grille (20) de barreaux comprenant une pluralité de paires de barreaux (23), les barreaux (23) de chaque paire sont espacés entre eux d'une distance permettant le passage de l'aile (52) de positionnement d'un des éléments (5) d'amortissement,
et **en ce que** l'aile (52) de positionnement est munie de lèvres (521, 522) de retenue par rapport aux barreaux (23).

2. Cage (1) selon la revendication 1, **caractérisée en ce que** les barreaux (23) de chaque paire de barreaux sont espacés d'une distance permettant l'introduction, entre les deux barreaux (23), de l'aile de positionnement (52) d'un des éléments (5) élastiquement déformable,
et **en ce que** les lèvres (521, 522) sont configurées de manière à se rabattre par déformation élastique lors du passage entre les deux barreaux et à reprendre leur forme déployée initiale après passage desdits barreaux.

3. Cage (1) selon l'une des revendications précédentes, **caractérisée en ce que** l'aile (52) de positionnement s'étend sur plus de la moitié de la longueur dudit bourrelet (51), et de manière discontinue pour permettre le passage de barreaux (22) de la grille (20) qui s'étendent transversalement audit élément (5) d'amortissement, à travers ladite aile (52) de positionnement.

4. Cage (1) selon l'une des revendications précédentes, **caractérisée en ce que** ledit bourrelet d'amortissement (51) de chaque élément (5) d'amortissement se présente sous la forme d'un corps creux allongé.

5. Cage (1) selon l'une des revendications précédentes, **caractérisée en ce que** la cage (1) présente une paroi, appelé paroi avant (3, 4), qui comprend une partie inférieure (3) fixe qui s'étend transversalement à la paroi de fond (2), et une partie supérieure (4), ajourée, par exemple formée par une grille, appelée paroi de contention, qui est articulée (34) à la partie inférieure (3) de la paroi avant entre une position relevée dans laquelle des volailles peuvent circuler dans le volume intérieur de la cage (1) délimité par les parois de la cage (1), et une position abaissée dans laquelle ledit volume intérieur de la cage (1) est réduit.

6. Cage (1) selon l'une des revendications précédentes, **caractérisée en ce que** lesdits éléments (5) d'amortissement s'étendent parallèlement les uns aux autres et à écartement des uns des autres.

7. Cage (1) selon la revendication 6, **caractérisée en ce que** l'écartement entre deux éléments (5) d'amortissement est compris entre 3.2 et 3.5 cm, de préférence de l'ordre de 3.3 cm.

8. Cage (1) selon l'une des revendications précédentes, **caractérisée en ce que** l'articulation (34) est située par rapport à la paroi de fond (2) de la cage (1) à une hauteur comprise entre 18.5 et 20 cm, de préférence de l'ordre de 19 cm.

9. Cage (1) selon l'une des revendications précédentes, **caractérisée en ce que** lesdits éléments (5) d'amortissement sont réalisés en un matériau élastomère.

10. Cage (1) selon l'une des revendications précédentes, **caractérisée en ce que** lesdits éléments (5) d'amortissement présentent une dureté comprise entre 20 et 95 shore A, de préférence comprise entre 60 et 70 shore A.

## Patentansprüche

1. Käfig (1) für das Stopfen von Geflügel, umfassend eine Bodenwand (2), die den Boden für das Geflügel bildet, wobei die Bodenwand (2) ein Stabgitter (20) umfasst,
wobei die Bodenwand (2) Dämpfungselemente (5) umfasst, wobei jedes Dämpfungselement (5) mindestens einen als Dämpfungswulst bezeichneten Teil (51) aufweist, der durch Abstützung des Geflügels elastisch verformbar ist und der sich aus dem Stabgitter (20) in Richtung des Innern des Käfigs (1) herausragend erstreckt,
**dadurch gekennzeichnet, dass** jedes Dämpfungselement (5) einen Positionierungsflügel (52) umfasst, der konfiguriert ist, um das Dämpfungselement (5) an das Stabgitter (20) zu koppeln,
und dass das Stabgitter (20) eine Vielzahl von Paare von Stäben (23) umfasst, wobei die Stäbe (23) jedes Paars untereinander in einem Abstand beabstandet sind, der den Durchgang des Positionierungsflügels (52) eines der Dämpfungselemente (5) erlaubt,
und dass der Positionierungsflügel (52) mit Haltelippen (521, 522) in Bezug zu den Stäben (23) ausgestattet ist.

2. Käfig (1) nach Anspruch 1, **dadurch gekennzeichnet, dass** die Stäbe (23) jedes Stabpaars in einem Abstand beabstandet sind, der das Einführen des Positionierungsflügels (52) eines der elastisch verformbaren Elemente (5) zwischen die zwei Stäbe (23) erlaubt,
und dass die Lippen (521, 522) derart konfiguriert sind, dass sie beim Durchgang zwischen den zwei Stäben durch elastisches Verformen anklappen und nach Durchgang der Stäbe erneut ihre ursprüngliche Form annehmen.

3. Käfig (1) nach einem der vorangehenden Ansprüche, **dadurch gekennzeichnet, dass** sich der Positionierungsflügel (52) über mehr als die Hälfte der Länge der Wulst (51) erstreckt und diskontinuierlich, um den Durchgang von Stäben (22) des Gitters (20) zu erlauben, die sich quer zum Dämpfungselement (5) durch den Positionierungsflügel (52) erstrecken.

4. Käfig (1) nach einem der vorangehenden Ansprüche, **dadurch gekennzeichnet, dass** die Dämpfungswulst (51) jedes Dämpfungselements (5) die Form eines länglichen Hohlkörpers hat.

5. Käfig (1) nach einem der vorangehenden Ansprüche, **dadurch gekennzeichnet, dass** der Käfig (1) eine als vordere Wand (3, 4) bezeichnete Wand aufweist, die einen festen unteren Teil (3), der sich quer zur Bodenwand (2) erstreckt, und einen durchbrochenen, beispielsweise von einem Gitter gebildeten, als Fixierungswand bezeichneten oberen Teil (4) aufweist, der am unteren Teil (3) der vorderen Wand zwischen einer angehobenen Position, in welcher das Geflügel in dem Innenvolumen des Käfigs (1), das von den Wänden des Käfigs (1) begrenzt ist, zirkulieren kann, und einer abgesenkten Position, in welcher das Innenvolumen des Käfigs (1) reduziert ist, angelenkt ist (34).

6. Käfig (1) nach einem der vorangehenden Ansprüche, **dadurch gekennzeichnet, dass** sich die Dämpfungselemente (5) parallel zueinander und beabstandet voneinander erstrecken.

7. Käfig (1) nach Anspruch 6, **dadurch gekennzeichnet, dass** die Beabstandung zwischen zwei Dämpfungselementen (5) zwischen 3,2 und 3,5 cm inklusive, vorzugsweise in der Größenordnung von 3,3 cm, beträgt.

8. Käfig (1) nach einem der vorangehenden Ansprüche, **dadurch gekennzeichnet, dass** sich das Gelenk (34) in Bezug zur Bodenwand (2) des Käfigs (1) in einer Höhe zwischen 18,5 und 20 cm inklusive, vorzugsweise in der Größenordnung von 19 cm, befindet.

9. Käfig (1) nach einem der vorangehenden Ansprüche, **dadurch gekennzeichnet, dass** die Dämpfungselemente (5) aus einem Elastomermaterial hergestellt sind.

10. Käfig (1) nach einem der vorangehenden Ansprüche, **dadurch gekennzeichnet, dass** die Dämpfungselemente (5) eine Härte aufweisen die zwischen 20 und 95 Shore A, vorzugsweise zwischen 60 und 70 Shore A, inklusive ist.

## Claims

1. A cage (1) for poultry cramming comprising a bottom wall (2) forming a floor for the poultry, said bottom wall (2) comprising a grid (20) of bars,
said bottom wall (2) comprising shock absorbing elements (5), each shock absorbing element (5) having at least one part (51), called shock absorbing bead, that is elastically deformable by bearing from the poultry and that protrudes from the grid (20) of bars on the inner side of the cage (1),
**characterized in that** each shock absorbing element (5) comprises a positioning wing (52) configured to couple said shock absorbing element (5) to the grid (20) of bars,
**in that** said grid (20) of bars comprising a plurality of pairs of bars (23), the bars (23) of each pair are spaced apart from one another by a distance allowing the passage of the positioning wing (52) of one of the shock absorbing elements (5),
and **in that** the positioning wing (52) is provided with retaining lips (521, 522) relative to the bars (23).

2. The cage (1) according to claim 1, **characterized in that** the bars (23) of each pair of bars are spaced apart by a distance allowing the insertion, between the two bars (23), of the positioning wing (52) of one of the elastically deformable elements (5),
and **in that** the lips (521, 522) are configured so as to fold down by elastic deformation during the passage between the two bars and to regain their initial deployed shape after passage by said bars.

3. The cage (1) according to one of the preceding claims, **characterized in that** the positioning wing (52) extends over more than half of the length of said bead (51), and discontinuously to allow the passage of bars (22) of the grid (20) that extend transversely to said shock absorbing element (5), through said positioning wing (52).

4. The cage (1) according to one of the preceding claims, **characterized in that** said shock absorbing bead (51) of each shock absorbing element (5) assumes the form of an elongated hollow body.

5. The cage (1) according to one of the preceding claims, **characterized in that** the cage (1) has a wall, called front wall (3, 4), which comprises a stationary lower part (3) that extends transversely to the bottom wall (2), and an open-worked upper part (4), for example formed by a grid, called containment wall, that is articulated (34) to the lower part (3) of the front wall between a raised position in which the poultry can circulate in the inner volume of the cage (1) defined by the walls of the cage (1), and a lowered position in which said inner volume of the cage (1) is reduced.

6. The cage (1) according to one of the preceding claims, **characterized in that** said shock absorbing elements (5) extend parallel to one another and away from one another.

7. The cage (1) according to claim 6, **characterized in that** the separation between two shock absorbing elements (5) is comprised between 3.2 and 3.5 cm, preferably about 3.3 cm.

8. The cage (1) according to one of the preceding claims, **characterized in that** the articulation (34) is situated relative to the bottom wall (2) of the cage (1) at a height comprised between 18.5 and 20 cm, preferably around 19 cm.

9. The cage (1) according to one of the preceding claims, **characterized in that** said shock absorbing elements (5) are made from an elastomer material.

10. The cage (1) according to one of the preceding claims, **characterized in that** said shock absorbing elements (5) have a hardness comprised between 20 and 95 shore A, preferably comprised between 60 and 70 shore A.
